# EUROPEAN PATENT SPECIFICATION

(11) **EP 3 501 919 B1**
(45) Date of publication and mention of the grant of the patent: **11.08.2021**
(21) Application number: 19157217.1
(22) Date of filing: 29.09.2017
(51) Int. Cl.: B60S 1/48, F24H 1/00, B60S 1/52, B60S 1/66, B60S 1/56

(54) **VEHICLE WINDSHIELD CLEANING SYSTEM**
FAHRZEUGSCHEIBENREINIGUNGSSYSTEM
SYSTÈME DE NETTOYAGE DE PARE-BRISE DE VÉHICULE

(30) Priority: 29.09.2016 US 201662401713 P
(43) Date of publication of application: 26.06.2019
(62) Divisional of application: 17194243.6
(73) Proprietor: Uusi, LLC, Reed City, MI 49677 (US)
(72) Inventor: Shank, David W, Hersey, MI Michigan 49639 (US); Paquette, Justin Lawrence, Manton, MI 49663 (US); Agrotis, Demetrius Andreou, Saint James, NY New York 11780 (US); Cox II, Edward J., Marion, MI Michigan 49665 (US)
(74) Representative: Somervell, Thomas Richard

(56) References cited:
- US-A1- 2012 117 745
- US-A1- 2016 046 264
- US-A1- 2016 272 164

## Description

### CROSS-REFERENCE TO RELATED APPLICATIONS

The present application claims priority from provisional application Serial No. 62/401,713, filed September 29, 2016, and is a continuation-in-part of application Serial No. 14/923,286, which is a continuation-in-part of application Serial No. 13/948,450, now patent 9,188,268 filed July 23, 2013, which is continuation-in-part of application Serial No. 11/928,738, now patent 7,857,238 filed October 30, 2007, which claims priority from provisional application Serial No. 60/952,036, filed July 26, 2007, and is a continuation-in-part of application Serial No. 11/341,116, now patent 7,588,194 filed January 27, 2006, which is a continuation-in-part of application Serial No. 10/894,266, now patent 7,641,131 filed July 19, 2004 (claiming priority from provisional application 60/551,571, filed March 9, 2004).

### BACKGROUND OF THE INVENTION

### 1. Field of the Invention

The present invention concerns a windshield cleaning system, and more particularly, to a windshield cleaning system that heats cleaning fluid applied to the windshield.

### 2. Description of the Related Art

U.S. Pat. No. 6,364,010 entitled "Device to Provide Heated Washer Fluid" to Richman et al. concerns an apparatus and method for improving the cleaning and deicing effectiveness of a washer fluid in a motor vehicle before spraying it against a windshield, headlamps, etc., and utilizes the heat from the engine coolant to elevate the temperature of the washer fluid. U.S. Pat. Nos. 5,957,384 and 6,032,324 also concern de-icing of a windshield.

US2016/272164A1 discloses vehicle camera cleaning systems used for cleaning foreign matter off of a camera lens, including, for example, a water flow nozzle arranged to eject water flow, an air nozzle arranged to eject air, and a central controller used to control the water flow nozzle and air nozzle.

US2016/046264A1 discloses apparatus for providing a heated cleaning fluid to a vehicle surface including an inlet port for receiving an amount of fluid, a housing bounding a reservoir in fluid communication with the inlet port, and an outlet port in fluid communication with the reservoir for dispensing an amount of heated fluid.

US2012/117745A1 discloses an on-board optical sensor cover including a holder and a washer nozzle.

### SUMMARY OF THE INVENTION

The present invention is defined by independent claims 1 and 6.

Accordingly, the present invention concerns an apparatus and method according to the claims for providing a large amount of heated cleaning fluid to a vehicle surface. According to the invention, a system has an inlet port for receiving an amount of fluid, an outlet port for dispensing an amount of heated fluid, a heating element that heats up fluid passing from the inlet to the outlet, and a control circuit for energizing the heating element with a voltage to heat the fluid passing from the inlet to the outlet.

According to the invention, the system provides heated cleaning fluid to a vehicle surface and includes structure defining an inlet port for receiving an amount of fluid, and an outlet port in fluid communication with a reservoir for dispensing an amount of heated fluid.

These and other objects, advantages, and features of the invention will become better understood from the following detailed description of one exemplary embodiment of the present invention which is described in conjunction with the accompanying drawings.

### BRIEF DESCRIPTION OF THE DRAWINGS

FIG. 1 is a block diagram schematic of a representative system for use with the present invention;
FIG. 2 is an alternate block diagram schematic of a representative system for use with the present invention;
FIG. 3 is a connection diagram of the representative system for use with the system of FIG 2;
FIG. 4 is an elevation view of a representative washer control system constructed according to the present invention;
FIGS. 5 is a plan view of a representative washer control system constructed according to the present invention; and
FIG. 6-7 are isometric and elevation section views of an alternate washer control system configuration.
FIG. 8 is a venturi based distribution system.
FIG. 9 is a dual ported nozzle.
FIG. 10 shows an electrically conductive element in proximity to a fluid nozzle
FIG. 11 is a lens with an electrically conductive coating on its surface.
FIG. 12 is a manifold based distribution system.

### DESCRIPTION OF THE PREFERRED EMBODIMENT(S)

The drawings depict embodiments of the present invention that concern a washer control system 10 for use with a vehicle. In the disclosed embodiments of the present invention, the control system 10 is used in conjunction with a windshield washer apparatus. The control system 10 includes a control circuit 14 that includes a power output drive circuit 20, a logic circuit 16 including an input signal interpretation portion, and a heater assembly 500 including at least one heating element 30 with at least one temperature sensor 18 and at least one thermal fuse 19 mounted together on substrate 27.

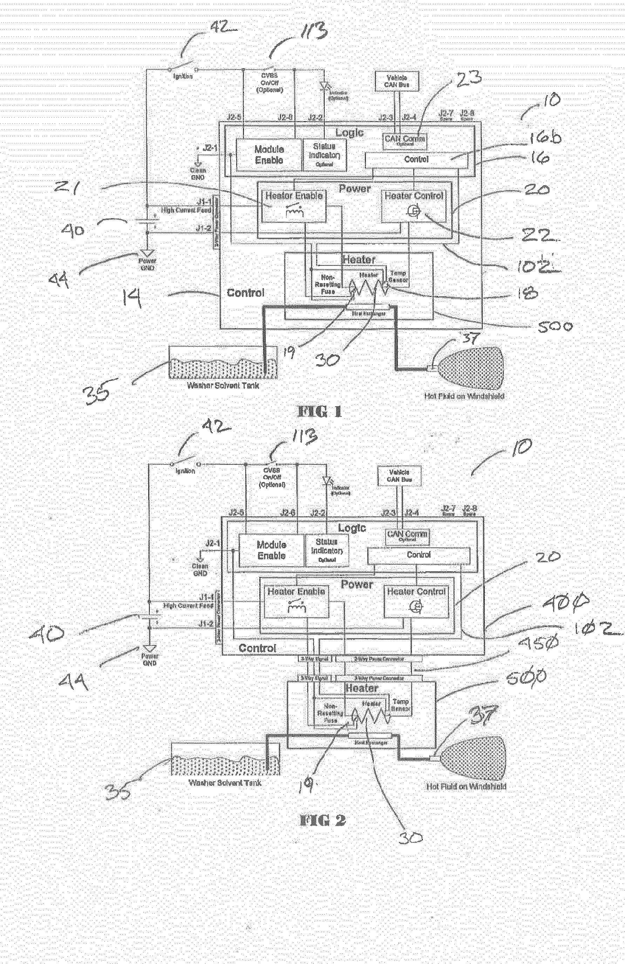

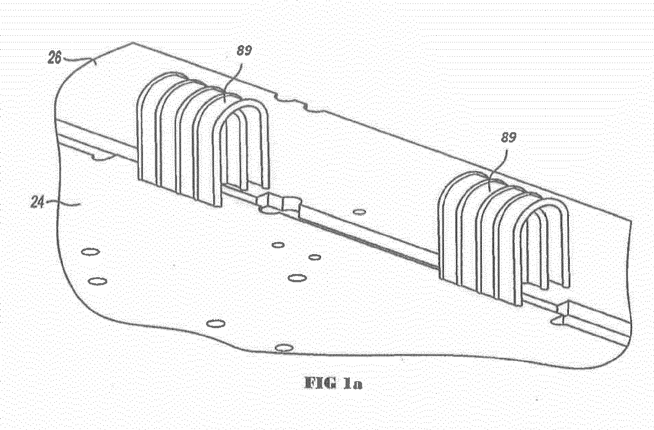

In FIG. 1 the logic portion 16 and the power portion 20 of the control circuit 14 are physically separated from each other by a barrier such as an interior wall section of control 14. Logic circuit 16 electronically interfaces with at least one temperature sensor 18. In one embodiment of the present invention, the temperature sensor provides signals related to the temperature of washer fluid supplied to windshield spray nozzles on the vehicle. In one embodiment of the present invention, the control system also includes a power output circuit 20 that supplies electrical power for at least one heating element that heats the windshield washer fluid contained in the heater assembly 500. One exemplary control system could have both "high side" 21 and "low side" 22 type drives working together as illustrated in FIGS. 1 and 2. An alternate control system is a "low side" type drive only, meaning the module activates and deactivates the heater element by controlling the electrical circuit path to ground. Another alternate control system could have an output drive that is a "high side" type only, meaning the module activates and deactivates the heater element by controlling the electrical circuit path to a power source. In accordance with another alternate control system, an electrical interface 23 coupled to a vehicular communication bus such as CAN, LIN, FlexRay, and the like allows the control system to be controlled by vehicle communications and makes data available to the vehicle for operation, prognostics, and diagnostics of the control system 14.

The logic circuit 16 includes a programmable controller or microprocessor 16b that implements control algorithms for washer heater control output functions in response to vehicle input signals. As seen in the block diagram schematic of FIG. 1, the control system 10 includes power output drive circuit 20 for controlling electrical power to the heating element 30. Heating element 30 may be composed of a single heating element or multiple heating elements. By selecting heater current draw and power rating, the heating time and total system current draw can be modified over a wide range of operating parameters based on individual vehicle requirements, i.e., electrical power available. The control circuit 16 also includes input signal interpretation circuitry to monitor input signals from, as one example, a temperature sensor 18. The temperature sensor 18 provides signals that allow for control of the amount of power delivered to the heating element 30 so that a desired temperature of the heater assembly 500 can be attained and maintained. The controller monitors inputs from a vehicle battery 40 and vehicle ignition 42. It is understood that a separate ignition input 42 may not be required if all power is obtained from the battery input 40.

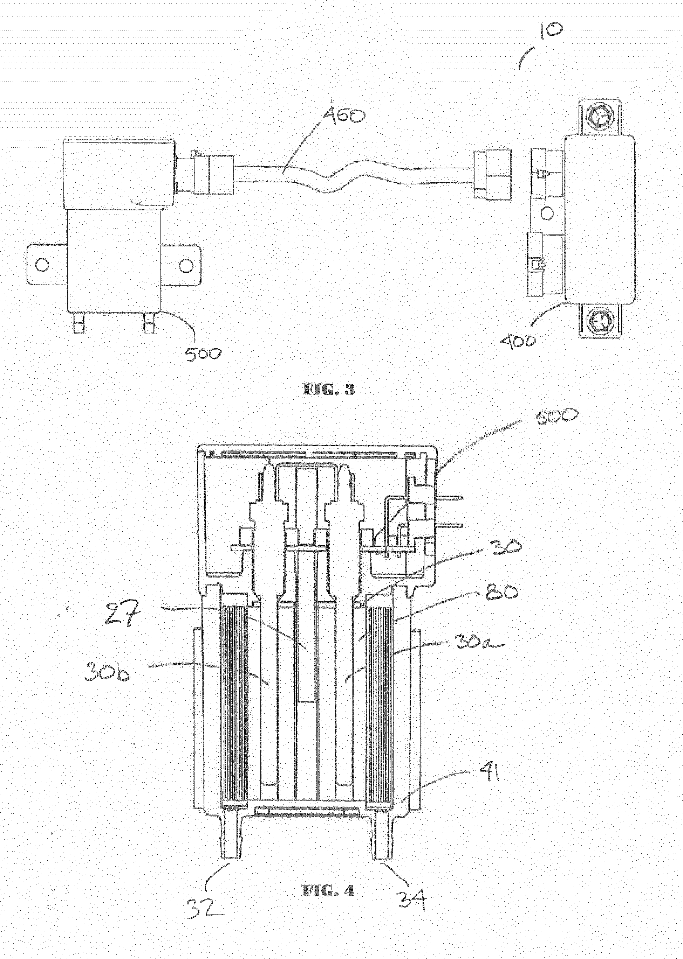

In accordance with an exemplary embodiment as illustrated in the block diagram schematic of FIG. 2 with continual reference to component connection drawing FIG. 3 and heater section view FIG. 4, control system 10 may be separated such that the logic portion 16 of the control and the power output drive circuit 20 can be physically separated into two circuit boards inside of the control 400. There has been evidence that under certain conditions there can be dendritic growth from one component connection on a circuit board to another component connection. If this occurs there can be serious failure modes associated with inadvertent connections in circuitry. Physical separation of the logic portion 16 from the power circuit 20 can be implemented to eliminate this possibility. An alternate method of separating a logic circuit from a power circuit is to place a slot in the circuit board that contains both logic section 24 and power circuitry 26 of FIG. la. The slot will stop the migration of dendritic growth from going from one area of a circuit board to another while still allowing components 89 to connect them together. Referring back to FIG. 3 the heater portion 500 is a separate module that receives electrical signals from the control 400 through a wiring harness 450 for the energization of heater 30, temperature sensing using sensor 18, and energization control using thermal fuse 19.

In an alternate embodiment the power circuit 20 could be contained in the heater portion 500 leaving the logic circuit 16 in control 400. This allows for higher electrical current signals to be isolated to the heater portion 500, with lower electrical current signals connected to the logic circuit 16 for both vehicle connections and heater circuit control signals.

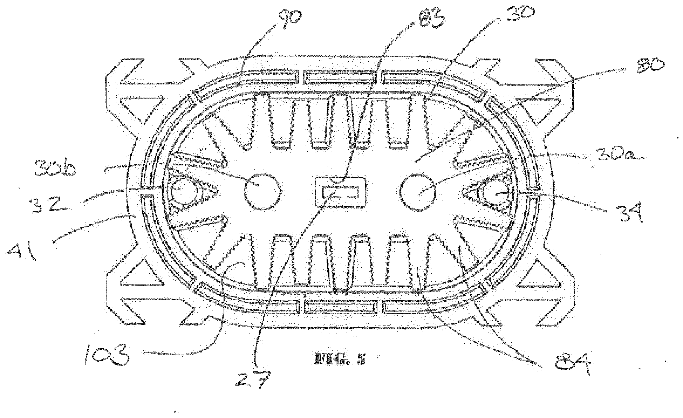

In one exemplary embodiment illustrated in FIG. 2 with continual reference to FIGS 3 and 4 the power output drive circuit 20 contained in control 400 controls power coupled to a heater element 30 in heater 500 that includes two glow plugs 30a, 30b (FIG. 4-5). It should be realized that other heating element equivalents such as nichrome wire, ceramic heaters, or any metallic or non-metallic type heater mounted in thermal contact with a heat exchanger 80 may be used. Heat exchanger 80 has been designed with a mass that is desirable for quickly heating fluid, having a desirable thermal mass to provide some latent heat and reduce the opportunity for boiling of fluid. Heat carrying fins 84 of heat exchanger 80 have ridges to gain surface area for improved heat transfer of thermal energy from the heat exchanger to the fluid as it flows past. Fluid is routed past the heat exchanger 80 in thermal contact with heat carrying fins 84 by routing fluid into an inlet 32 and then out outlet 34. The inlet receives washer fluid from a fluid reservoir 35 (FIGS. 1-2) of a motor vehicle and the outlet 34 delivers heated washer fluid to nozzles 37 mounted to the vehicle which direct the washer fluid against the vehicle surface, typically a windshield, lift gate glass, headlamps, camera lens, etc. FIG. 5 depicts a section view of an exemplary embodiment of a housing 41 of heater 500 that defines a fluid reservoir 103 that surrounds the heat sinks. The housing 41 is constructed from plastic or other material with favorable thermal and structural characteristics and has air chamber features 90 that act as an insulating chamber from the environment outside the housing 41 and the heated fluid in reservoir 103. Air chamber features 90 also act as a compressible space when the wall between air chamber features 90 and fluid reservoir 103 moves due to the freezing of fluid in reservoir 103 thereby removing the risk of wall fracture due to said freezing fluid.

The controller 400 (FIG. 2-3) constructed in accordance with the exemplary embodiment of the present invention implements control algorithms for washer heater control output functions in response to vehicle input signals. As washer fluid temperature changes due to ambient temperature changes, battery voltage changes, and the like, the duration of applied heat is increased or decreased in order to maintain a washer fluid at or near a target temperature. Control of the heating may also include redundant failsafe mechanisms such as a thermal fuse 19 (FIG. 1-2).

### Controller Schematics

The block diagram shown in FIG. 2 depicts operation of a control system 10 having external electrical connections, which include battery 40, ground 44, and ignition 42. The block diagram also shows further external electrical connections including a user operated system enable switch 113 and CAN communications 23. The battery input connection 40 provides the voltage supply needed by the control system 10. This connection allows the high current flow required by the heating element. The ground connection 44 provides the current return path to the battery negative terminal. This ground connection allows the high current flow required by the heating element plus the requirement of the control system 10. An ignition input 42 provides power to the controller. It is understood that separate ignition input 42 may not be required if all power is obtained from the battery input 40 and conversely a battery input may not be needed if all power is obtained from the ignition input 42. The battery voltage is monitored by the controller 14 to determine if there is sufficient voltage present to allow the control system to operate.

The control 16b input 102 is from the temperature sensor 18 (FIG. 1-2) and is in physical contact with the heat exchanger 80 (FIG. 4-5) providing a signal that is directly related to washer fluid temperature. Washer fluid temperature is monitored by using a temperature sensor such as a thermistor, RTD, or the like. The washer fluid is monitored non-invasively by attaching the temperature sensor to the heater. Alternatively, the fluid temperature could be monitored invasively by placing a temperature sensor directly into the fluid through a threaded fitting or other suitable attachment method. It is understood that the control 14 of FIG. 1 and 400 of FIG. 2 can optionally have an output to control the washer pump of system 10 or the vehicle wiper motor either directly or by communications through a communications protocol such as CAN, LIN, etc.

In the exemplary embodiment of the present invention, a desired heater temperature is predetermined to be in a range between 49 and 57 degrees Celsius (120 and 135 degrees Fahrenheit). Placing the temperature sensor 18 in physical contact with the heat exchanger 80 and maintaining the heater temperature at a temperature at or below 57 degrees Celsius (135 degrees Fahrenheit) prevents the heating element from heating the cleaning fluid to an undesirable temperature, such as at the temperature at which the fluid boils. Ensuring that the washer fluid does not boil will prevent the undesirable effect of washer fluid weeping from the nozzles. It also helps prevent the formation of mineral deposits that could potentially clog the fluid dispensing nozzles. If the temperature sensor 18 is not mounted directly on the heating element, but is rather located in the fluid reservoir 103, only an approximate, latent measurement of the heating element temperature is sensed. This would allow the heat exchanger 80 to heat to a temperature that is hotter than the desired fluid temperature in the fluid reservoir 103 and potentially cause boiling and the formation of nozzle clogging mineral deposits. It is well known that the boiling temperature of fluid is influenced by air pressure variations due to altitude. Water boils at 100°C (212°F) at sea level and at 87°C (189°F) at 3.66 Km (12,000 ft) which is a high altitude requirement of some vehicle manufacturers. The same effect is seen in alcohols that are typically used in washer fluids only the boiling temperatures are much lower. Methyl alcohol boils at 64°C (148°F) for example. An aspect of the exemplary embodiment is to use the elevation of the vehicle so that the temperature of the fluid can be controlled such that the fluid will never be allowed to boil and yet allow the temperature of the fluid to increase thereby further improving the efficacy of the fluid for cleaning. Two methods that can be used to determine elevation is by an air pressure sensor or global position satellites (GPS). Components required to determine elevation by these means could be incorporated into washer control system 10 or alternately elevation could be gathered from vehicle based sensors, or other devices like cell phones and GPS devices that are coupled to the vehicle or washer system 10 either by direct connection or by blue tooth communications or other communications means.

A further aspect of the exemplary embodiment would be to use GPS or cell phone towers to determine geographic location worldwide. Different countries have regulations for what type of cleaners and solvents can be used in an automotive washer system. If it is known that a vehicle is in a certain geographic area that uses only isopropyl alcohol based washer fluid which has a boiling point of 79°C (177°F), the desired fluid temperature threshold can be modified to say accommodate the boiling point of the various fluids allowed in that area. This will allow higher fluid temperatures to be used thereby gaining an improvement in fluid cleaning efficacy and yet ensuring that the fluid does not boil. Having elevation and geographic awareness enhances cleaning ability and guards against boiling of washer fluid.

Upon initiation of the heating function, the output drive is turned on for a maximum on time or until the feedback temperature reading approaches a set point temperature. In one embodiment, a preset maximum on time is empirically derived to stay below the boiling point of the cleaning fluid. Subsequently the control will read the heating element 30 temperature via temperature sensor 18 and make a determination if power should be reapplied. If the sensed temperature is below the desired set point, the output will be re-enabled at a variable duty cycle so that the heater 30 is heated to the set point goal temperature as quickly as possible without exceeding a maximum allowable overshoot temperature.

Normal operation consists of maintaining the fluid temperature at the desired set point temperature by varying the duty cycle at which voltage is applied across the glow plugs 30a and 30b of heater 30. The output duty cycle changes based on how far the sensed temperature is below the set point temperature.

In the event the operating voltage from the battery or ignition exceeds a predetermined high limit or is below a predetermined low limit the control 16 provides a load shedding function by disabling the output 20 for a timeout period. After the timeout period, if voltage conditions are within normal parameters, the control again enables the output. It is understood that the operating voltage range can be set to whatever voltages are required for a particular application.

In FIGS. 1-2 heater 30 is energized with battery voltage by a relay 21. A thermal fuse 19 is in series with the relay coil and is in proximity to the heater 30. If the heater becomes too hot, the thermal fuse 19 will open and cease providing voltage to the relay coil thereby removing voltage from the heater.

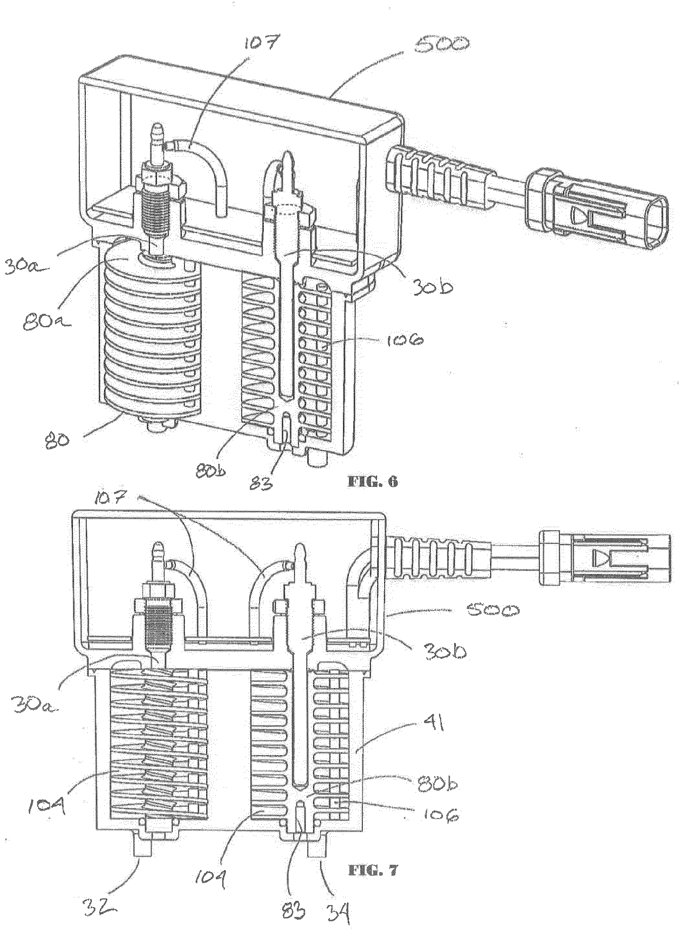

An alternate embodiment is shown in FIGS. 6-8 which uses a spiral shaped heat exchanger 80. Heaters 30a and 30b are located in the center of each heat exchanger so that thermal energy is dispersed outward to the outer diameter of the heat exchanger 80. FIG. 6 shows a isometric section view of heater 500 with one heat exchanger 80a and one heating element 30a not sectioned and FIG. 7 is an elevation view of FIG. 6. Fluid from the washer reservoir enters the heater 500 through inlet 32 and begins flowing through fluid volume 104 around spiral heat exchanger 80a. When fluid has fully traversed heat exchanger 80a it flows to heat exchanger 80b and begins flowing through fluid volume 104 around spiral heat exchanger 80b. When fluid has fully traversed heat exchanger 80b it exits heater 500 through outlet 34. Temperature sensing is achieved by placing a temperature sensor, such as a thermistor, into cavity 83 in each heat exchanger. Power may be supplied from the control 400 to the heaters 80 through a single common electrical conductor 107, or power may be supplied to each heater independently through two electrical conductors, one for each heater 80. Along the spiral fluid path 104 there can be features added such as rod segments 106 in between threads to create turbulence in the fluid flow thereby increasing the heat homogeneity of the fluid.

It should be realized that heated fluid is beneficial to cleaning other surfaces besides windshields. In another embodiment, heated fluid is beneficial when used to clean both front and rear camera systems located on a vehicle. It is a well-known problem in the automotive industry that rear facing cameras get coated with road grime such as mud, dust, oil, salt, etc., while driving due to the low pressure area created behind the vehicle. In the low pressure area, dust and other contaminants are held and deposited onto vehicle surfaces including but not limited to lights/lamps, plastic, metal, and glass objects, radar and lidar emission surfaces, etc. Specifically included in the surface list are camera lenses. A camera lens, when coated with residue, renders the rear facing camera's transmitted image less than desirable, to the point of non-usable. An ambient temperature spray from a spray nozzle would benefit the surface in removing residue, but a heated fluid spray further improves cleanliness, speeds the cleaning process, and helps reduce in fluid usage.

There is also an issue with forward facing surfaces including, but not limited to, lights/lamps, plastic, metal, and glass objects in that they, too, collect road grime. Forward looking cameras and lamps collect road grime such as mud, dust, oils, salt, and insects due to direct impact. As with the rear facing surfaces, an ambient temperature spray would benefit the surfaces in removing residue, but heated fluid sprayed from a spray nozzle further improves cleanliness, speeds the cleaning process, and helps reduce in fluid usage.

A method used to keep a camera lens clean involves the clarity of what a camera sees and heated wash system 10. If an electronic module that uses the camera image, analyzes the image and determines that the lens is dirty, the electronic module could start a wash cycle, and preferably a heated wash cycle, to clean the lens. In an exemplary embodiment this would be automatic so the driver always has a clear image from the camera and does not need to be involved in its cleaning. However, the system could be manual having the electronics module notify the driver to initiate a wash cycle. Likewise, if a camera system or other type sensor such as light intensity were to analyze a headlamp for clarity or light output, a wash cycle, or preferably a heated wash cycle, could commence and spray wash the headlamp.

Additionally, heated fluid could be used to aid in the cleaning of vehicular lighting. The automotive industry, Europe in particular, has had washer systems for headlamps for many years. While beneficial to have a wash fluid spray from a nozzle on the headlamp surface it is an improvement to spray the headlamp surface with heated fluid.

To further aid in cleaning of both forward and rearward facing surfaces, various coatings could also be applied. For example, an oleophobic and/or lipophobic surfactant could be applied to camera lenses and lamp lenses to help reduce the amount of oils and proteins (from insects) that stick to the surface. An oleophobic surfactant, in combination with a heated wash fluid spray significantly improves the cleanliness of a surface and the ability to clean the surface.

A further embodiment of the invention is a washer system 10 that includes a control 400 and at least two heaters 500 that are mounted advantageously to provide heated washer fluid to multiple surfaces on a vehicle. For example each spraying nozzle for a windshield could have its own heater 500 thus providing more heated fluid per nozzle allowing longer spray times with heated fluid. To further increase the efficacy of washer system 10 the heater 500 should be mounted as close to the spray nozzle as possible. In the case of the windshield nozzles the heater 500 could be mounted in the engine compartment of a vehicle or under the cowling at the base of the windshield so that the distance between the heater and nozzle is further reduced. Another example is where a heater 500 is located in the front of the vehicle for use on the windshield and another heater 500 located in the rear of the vehicle providing heated washer fluid for rear windows, camera lenses, lights, etc. The aforementioned washer system 10 is advantageous in that it reduces overall washer system 10 cost since only one control 400 is needed for multiple heaters 500 instead of a control with each heater. It is understood that while the heater 500 portion of system 10 is advantageously mounted close to its respective nozzle(s) the control 400 can be mounted in the engine compartment and harness 450 connects it to heater 500 modules. It is also understood that the control can be mounted in the passenger compartment of a vehicle providing a less stressful operating environment and then connected to heater 500 module(s) by running harness 450 through the vehicle firewall for example to the engine compartment or cowling area for connection to heater(s) 500. Referencing FIG. 3 an alternate embodiment configuration removes the necessity of harness 450 and allows control 400 and heater 500 to connect directly to each other via housing mounted connectors. It should be appreciated that the operation of the fluid flow through the heat exchanger is similar to the fluid flow through the heat exchanger 80 disclosed in FIG. 18 of U.S. Patent Application Publication No. 2016/0046264.

### Electrostatic repulsion

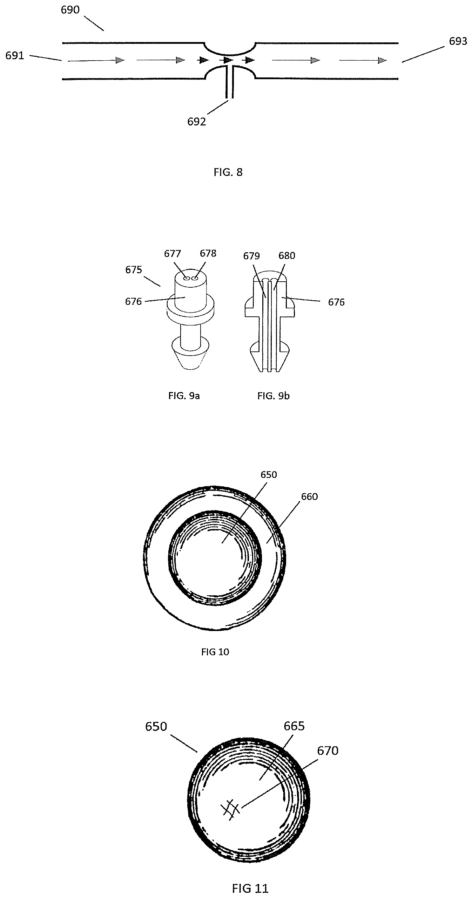

Referring to FIG. 10 in an alternate embodiment of the invention, an electrically conductive element 660 is in proximity to a target such as a camera lens 650, the lens of a LIDAR sensor, or simply a surface area that is desired to keep clean. The conductive element 660 is charged appropriately such that dust particles in the immediate vicinity will pick up a charge of the same polarity resulting in the repulsion of the dust particles thereby reducing dust build up on the lens 650 or said surface area. In like manner the conductive element 660 could be charged such that dust particles are attracted to the charged area keeping them from landing on the lens or said surface area.

### Electrostatic repulsion with surface coating for heat

Referring to FIG. 11 in yet another embodiment the lens surface 665 of lens 650 could have an electrically conductive coating 670 that would allow for a charge to be placed directly on the lens to repel dust. Said electrically conductive coating 670 could also be energized such that heat is generated in the coating thereby enabling the melting of ice and snow from the lens surface.

### Fluid (pressure, pulse, articulation)

Referring to FIG. 1 and 2 another preferred embodiment provides for heated fluid that is dispensed from a spray nozzle or orifice 37 that provides fluid at a defined pressure and/or volume to a lens or desired surface such that the fluid stream is pulsated to aid in the cleaning of debris from the lens. Said fluid stream may also be articulated in a back and forth sweeping motion to aid in the removal of debris. The fluid stream could be both pulsated and have a sweeping motion during the dispensing of fluid. The pulsation of the stream could be achieved by having the fluid stream modulated as it passes through or by a piezo element in the nozzle or orifice 37.

### Air stream and fluid with air

Referring to FIG. 9a and 9b another preferred embodiment provides for a stream of air to be directed toward a camera or LIDAR lens or other surface area. In the event of dust, dirt, or other contaminant build up on a surface, it is desirable to remove said contaminant such that a minimal amount of washer fluid is consumed. In certain cases where the contaminant is not strongly adhered to the surface, a stream of air projected at a velocity such that the contaminants are removed by simply blowing them off similar to the common canned air that is widely used to clean computer keyboards from dust. Nozzle 675 shows a typical device for directing air and/or fluid. Body 676 contains two orifices 677 and 678 with orifice channels 679 and 680 that go full through body 676 as shown in FIG. 9b, such that one orifice 677 is for air and orifice 678 is for fluid.

A preferred cleaning method of a lens or surface area would be to begin with an air stream of a given velocity and pressure to remove dust, water drops, and other non-adhered contaminants. If it is deemed necessary to further clean the said surface area, fluid could be directed as described previously to clean the surfaces.

Another preferred method is to combine the air and fluid streams together into a common stream such that both fluid and air are discharged simultaneously to clean the surface. The fluid is propelled at a higher velocity due to the pressurized air traveling with it.

Referring to FIG. 8 to obtain air to direct toward a surface to be cleaned, a pressurized vessel could be maintained to provide air to be discharged at a given velocity. Air could also be provided by an air pump on an as-needed basis. A preferred approach is to have the fluid path from the reservoir and pump includes a venturi 690 such that as the motive fluid 691 is flowing, air is drawn in through port 692 and pressurized. Upon exiting the outlet 693 of venturi 691 the air/fluid mix is delivered to a nozzle. The entrained compressed air expands, further accelerating the fluid to a higher velocity to impinge upon the desired surface area.

Another preferred approach is to use a venturi 690 to draw fluid from a reservoir that is then directed toward a surface. Air could be driven through said venturi inlet port 691 and the low pressure port 692 would draw fluid into the air stream driving the fluid particulates toward a surface to be cleaned. In this embodiment, the air could be heated prior to its entering the venturi so that when fluid is drawn into the venturi, it picks up heat from the air so that when it is dispensed, it has an increased temperature allowing for better cleaning of the desired surface.

### Fluid type sensing Density

Another preferred embodiment uses a sensor that is integral to the fluid heating system to determine the type of fluid that is being used, e.g., methanol, isopropyl, or plain water. By sensing the dielectric constant of a fluid, the fluid type can be determined. When the constituency of the fluid is known, the temperature to which it can be heated can be adjusted to allow for hotter fluid without exceeding the boiling temperature of a particular type of fluid. The cleaning capability of the fluid is enhanced with increased temperature while still not allowing the fluid to boil off.

### Image feature detection

In an autonomous vehicle it is imperative that camera lenses remain clean so that valid data is always available for situational awareness as it relates to moving and non-moving objects, i.e., proximity to cars, pedestrians, &C. A method of determining if a camera lens needs to be cleaned entails taking an image from a camera, specifically from a particular first area. To the said image, analyses are performed to determine key characteristics of objects in the image such as edges, shapes, color, contrast, &C. As the objects in the field of view come closer to the vehicle, they will become larger and encompass more and more pixels, or a higher percentage, of the total pixels available in the entire image. As key characteristic analyses are performed on an ongoing basis, it can be anticipated where any particular object, or feature of an object, will be located in the overall image based on speed and direction of the vehicle. If, in the projected path of an anticipated feature, said feature is removed, or is removed and returned, to a second area of the projected path, it can be determined that the image is being blocked by dirt, an insect, or other contaminant on the lens of the camera. On an ongoing basis, if features of multiple objects are always blocked in a particular area, it increases the confidence that there is indeed blockage on that area of the lens. Once it is determined that a lens is dirty, cleaning of said lens may commence.

### Manifold distribution of fluid

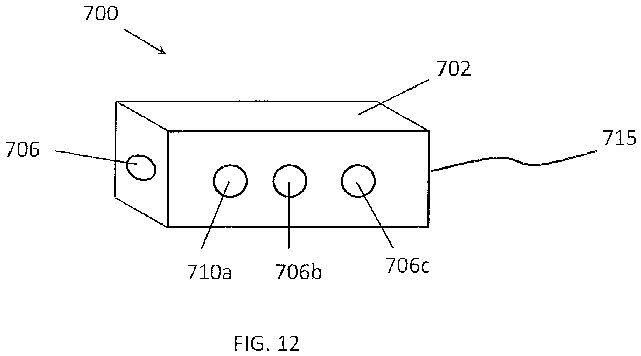

In certain cases there may be multiple lenses and/or surface areas that need to be cleaned. Referring to Figure 12 an embodiment of the invention provides for selectively dispensing fluid through individual orifices or multiple orifices either sequentially or at the same time. The embodiment includes a manifold system 700 with manifold body 702 for selectively choosing a flow path associated with a particular orifice (spray nozzle). Fluid is pumped from a reservoir through manifold 702 inlet 706 to at least one output orifice 710a, 710b, 710c. If a lens, such as from a camera or LIDAR sensor is determined to be in need of cleaning, the fluid path associated with that particular lens will be chosen and fluid dispensing will commence.

The flow path selection is determined by a control or by the vehicle operator and a signal is then sent through an electrical harness 715 to the manifold to energize a solenoid, a valve, or the like, that in turn, allows fluid to flow through a chosen path 710a, 710b, or 710c.

In a preferred embodiment, the said manifold system 700 will allow for fluid paths, singly or in groups, to be chosen according to need, as well as allow for fluid and air to be dispensed together or each individually. The preferred system has a single nozzle with at least one orifice that accommodates both fluid and air dispensing

The present invention has been described in an illustrative manner. It is to be understood that the terminology, which has been used, is intended to be in the nature of words of description rather than of limitation.

Many modifications and variations of the present invention are possible in light of the above teachings. Therefore, the present invention may be practiced other than as specifically described.

Aspects of the invention may comprise features or combinations of features derived from any of the following numbered clauses.

## Claims

1. An apparatus for providing a heated cleaning fluid to a vehicle surface comprising:
a housing (41) including a fluid reservoir (103), the housing (41) including an inlet port (32) for routing fluid into the fluid reservoir (103) for heating fluid from an external source;
the housing (41) further including an outlet port (34) in fluid communication with the fluid reservoir (103) for dispensing an amount of heated fluid to a nozzle (675) for spraying heated fluid onto a surface;
a heating element (30) for heating fluid that passes from the inlet port (32) to the outlet port (34) through the fluid reservoir (103);
a heat exchanger (80) supported by the housing (41) in a position that is at least partially covered by fluid within the fluid reservoir (103) and coupled to the heating element (30) so that heat emitting surfaces of the heating element (30) engage and transmit heat to the heat exchanger (80);
a control circuit (14) connected to the heating element (30) for energizing the heating element (30) with a voltage and thereby heat fluid passing from the inlet port (32) to the outlet port (34) through the fluid reservoir (103); and
wherein the nozzle (675) includes a body (676) containing two orifices (677) and (678) with orifice channels (679) and (680) in a side by side relationship such that one orifice (677) is for air and one orifice (678) is for the heated fluid and a venturi (690) in the fluid path to draw air through a port (692) as fluid flows through the venturi (690).

2. The apparatus of claim 1 wherein the surface is a lens comprising one of a camera lens and a lamp lens.

3. The apparatus of claim 2 including an electrically conductive element (660) in proximity to the one of the camera lens and the lamp lens.

4. The apparatus of claim 2 including an electrically conductive coating (670) on one of the camera lens and the lamp lens.

5. The apparatus of claim 1 including a manifold system (700) having a manifold body (702) for selectively choosing a flow path associated with a particular nozzle (675), and wherein the manifold body (702) includes an inlet (706) to receive fluid that is pumped from a reservoir and at least one output orifice (710a, 710b, 710c) to expel the fluid to clean multiple surfaces.

6. A method of providing a heated cleaning fluid to a vehicle surface, said method comprising the steps of:
providing a housing (41) including a fluid reservoir (103);
providing an inlet fluid path for routing fluid into the fluid reservoir for heating fluid from an external source;
providing an outlet fluid path in fluid communication with the fluid reservoir (103) for dispensing an amount of heated fluid to a nozzle (675) for spraying heated fluid onto a surface;
mounting a heater (500) and a heat exchanger (80) in heat transfer relation to each other for heating fluid that passes through the fluid reservoir (103);
connecting a control circuit (14) to the heater (500) for energizing the heater (500) with a voltage and thereby heat fluid passing through the fluid reservoir (103);
causing fluid to flow through the fluid reservoir (103) while energizing the heater (500) to heat the fluid within the fluid reservoir (103);
causing fluid to flow through the nozzle (675) including a body (676) containing two orifices (677) and (678) with orifice channels (679) and (680) in a side by side relationship such that one orifice (677) is for air and one orifice (678) is for the heated fluid; and disposing a venturi (690) in the fluid path to draw air through a port (692) as fluid flows through the venturi (690).

7. The method of claim 6 including providing the surface as a lens comprising one of a camera lens and a lamp lens.

8. The method of claim 7 including disposing an electrically conductive element (660) in proximity to the one of the camera lens and the lamp lens.

9. The method of claim 7 including disposing an electrically conductive coating (670) on one of the camera lens and the lamp lens.

10. The method of claim 6 including disposing a manifold system (700) having a manifold body (702) between the outlet port (32) and the nozzle (675) and selectively choosing a flow path associated with a particular nozzle (675), the method further including receiving fluid at an inlet (706) of the manifold body (702) that is pumped from a reservoir and expelling the fluid through at least one output orifice (710a, 710b, 710c) of the manifold body (702) to clean multiple surfaces.

## Patentansprüche

1. Gerät zum Bereitstellen einer erhitzten Reinigungsflüssigkeit für eine Fahrzeugoberfläche, Folgendes umfassend:
ein Gehäuse (41), welches ein Fluidreservoir (103) einschließt, wobei das Gehäuse (41) einen Einlassanschluss (32) zum Leiten von Fluid in das Fluidreservoir (103) einschließt, zum Erhitzen von Fluid aus einer externen Quelle;
wobei das Gehäuse (41) ferner einen Auslassanschluss (34) einschließt, in Fluidkommunikation mit dem Fluidreservoir (103), zum Abgeben einer Menge von erhitztem Fluid an eine Düse (675) zum Sprühen erhitzten Fluids auf eine Oberfläche;
ein Heizelement (30) zum Erhitzen von Fluid, welches vom Einlassanschluss (32) zum Auslassanschluss (34) durch das Fluidreservoir (103) strömt;
einen Wärmetauscher (80), welcher durch das Gehäuse (41) in einer Position gestützt wird, welche mindestens teilweise durch Fluid innerhalb des Fluidreservoirs (103) bedeckt ist, und welcher mit dem Heizelement (30) so gekoppelt ist, dass Wärme emittierende Flächen des Heizelementes (30) mit dem Wärmetauscher (80) in Eingriff gehen und Wärme an diesen übertragen;
einen Steuerschaltkreis (14), welcher mit dem Heizelement (30) verbunden ist, zum Erregen des Heizelements (30) mit einer Spannung und dadurch Erhitzen von Fluid, dass vom Einlassanschluss (32) zum Auslassanschluss (34) durch das Fluidreservoir (103) strömt; und
wobei die Düse (675) einen Körper (676) einschließt, welcher zwei Öffnungen (677) und (678) enthält, welche Öffnungskanäle (679) und (680) in einer Seite an Seite Beziehung aufweisen, sodass eine Öffnung (677) für Luft ist und eine Öffnung (678) für das erhitzte Fluid ist und ein Venturi (690) in dem Fluidweg, um Luft durch einen Anschluss (692) zu saugen während Fluid durch das Venturi (690) strömt.

2. Gerät nach Anspruch 1, wobei die Oberfläche eine Linse ist, welche eine von einer Kameralinse und einer Lampenlinse umfasst.

3. Gerät nach Anspruch 2, welches ein elektrisch leitfähiges Element (660) in der Nähe von der einen der Kameralinse und der Lampenlinse einschließt.

4. Gerät nach Anspruch 2, welches eine elektrisch leitfähige Beschichtung (670) auf einer von der Kameralinse und der Lampenlinse einschließt.

5. Gerät nach Anspruch 1, welches ein Verteilersystem (700) einschließt, welches einen Verteilerkörper (702) aufweist, zum selektiven Auswählen eines Fließwegs der mit einer bestimmten Düse (675) verbunden ist, und wobei der Verteilerkörper (702) einen Einlass (706) einschließt zum Aufnehmen von Fluid das aus einem Reservoir gepumpt wird und mindestens eine Auslassöffnung (710a, 710b, 710c), zum Ausstoßen des Fluids um zahlreiche Oberflächen zu reinigen.

6. Ein Verfahren zum Bereitstellen einer erhitzten Reiningungsflüssigkeit auf eine Fahrzeugoberfläche, wobei das Verfahren die folgenden Schritte umfasst:
- Bereitstellen eines Gehäuses (41), welches ein Fluidreservoir (103) einschließt;
- Bereitstellen eines Einlass-Fluidwegs zum Leiten von Fluid in das Fluidreservoir zum Erhitzen von Fluid aus der externen Quelle;
- Bereitstellen eines Auslass-Fluidwegs, welcher in Fluidverbindung mit dem Fluidreservoir (103) steht, um eine Menge von erhitztem Fluid an eine Düse (675) abzugeben, um erhitztes Fluid auf eine Oberfläche zu sprühen;
- Montieren eines Erhitzers (500) und eines Wärmetauschers (80), in Wärmetauschbeziehung zueinander, zum Erhitzen von Fluid, welches durch das Fluidreservoir (103) strömt;
- Anschließen eines Steuerschaltkreises (14) an den Erhitzer (500), zum Versorgen des Erhitzers (500) mit einer Spannung und dadurch erhitzen von Fluid, welches durch das Fluidreservoir (103) strömt;
- Bewirken, dass Fluid durch das Fluidreservoir (103) strömt, während der Erhitzer (500) erregt wird, sodass Fluid in dem Fluidreservoir (103) erhitzt wird;
- Bewirken, dass Fluid durch die Düse (675) strömt, welche einen Körper (676) einschließt, welche zwei Öffnungen (677) und (678) enthält, welche Öffnungskanäle (679) und (680) in einer Seite an Seite Beziehung aufweisen, sodass eine Öffnung (677) für Luft ist und eine Öffnung (678) für das erhitzte Fluid ist und Anordnen eines Venturis (690) in dem Fluidweg, um Luft durch einen Anschluss (692) zu saugen während Fluid durch das Venturi (690) strömt.

7. Verfahren nach Anspruch 6, welches das Bereitstellen der Oberfläche als Linse, welche eine Kameralinse oder eine Lampenlinse umfasst, einschließt.

8. Verfahren nach Anspruch 7, welches das Anordnen eines elektrisch leitfähigen Elements (660) in der Nähe von der Kameralinse oder der Lampenlinse einschließt.

9. Verfahren nach Anspruch 7, welches das Aufbringen einer elektrisch leitfähigen Beschichtung (670) auf einer von der Kameralinse und der Lampenlinse.

10. Verfahren nach Anspruch 6, welches das Anordnen eines Verteilersystems (700), das einen Verteilerkörper (702) zwischen dem Auslassanschluss (32) und der Düse (675) aufweist, einschließt, und selektives Auswählen eines Fluidwegs, welcher einer bestimmten Düse (675) zugeordnet ist, wobei das Verfahren ferner das Aufnehmen von Fluid in einem Einlass (706) des Verteilerkörpers (702) einschließt, welches aus einem Reservoir gepumpt wird und Ausstoßen des Fluids durch mindestens eine Auslassöffnung (710a, 710b, 710c) des Verteilerkörpers (702) zum Reinigen zahlreicher Oberflächen.

## Revendications

1. Appareil pour fournir un fluide de nettoyage chauffé à une surface de véhicule, comprenant :
un boîtier (41) incluant un réservoir de fluide (103), le boîtier (41) incluant un orifice d'entrée (32) pour acheminer du fluide jusque dans le réservoir de fluide (103) pour chauffer un fluide à partir d'une source extérieure ;
le boîtier (41) incluant en outre un orifice de sortie (34) en communication de fluide avec le réservoir de fluide (103) pour délivrer une quantité de fluide chauffé à une buse (675) destinée à pulvériser du fluide chauffé sur une surface ;
un élément chauffant (30) destiné à chauffer du fluide qui passe de l'orifice d'entrée (32) jusqu'à l'orifice de sortie (34) à travers le réservoir de fluide (103) ;
un échangeur de chaleur (80) soutenu par le boîtier (41) dans une position qui est au moins en partie recouverte par du fluide à l'intérieur du réservoir de fluide (103) et couplé à l'élément chauffant (30) de telle manière que des surfaces émettant de la chaleur de l'élément chauffant (30) mettent en prise l'échangeur de chaleur (80) et lui transmettent de la chaleur ;
un circuit de commande (14) connecté à l'élément chauffant (30) pour alimenter l'élément chauffant (30) avec une tension et ainsi chauffer du fluide passant de l'orifice d'entrée (32) jusqu'à l'orifice de sortie (34) via le réservoir de fluide (103) ; et
dans lequel la buse (675) inclut un corps (676) contenant deux orifices (677) et (678) avec des canaux d'orifices (679) et (680) dans une relation côte à côte, de telle sorte qu'un orifice (677) est pour l'air et un orifice (678) est pour le fluide chauffé, et un tube de venturi (690) dans le trajet du fluide pour aspirer de l'air à travers un orifice (692) pendant que du fluide s'écoule à travers le tube de venturi (690).

2. Appareil selon la revendication 1, dans lequel la surface est une lentille comprenant l'une parmi une lentille de caméra et une lentille de lampe.

3. Appareil selon la revendication 2, incluant un élément électriquement conducteur (660) à proximité de l'une de la lentille de caméra et de la lentille de lampe.

4. Appareil selon la revendication 2, incluant un revêtement électriquement conducteur (670) sur l'une de la lentille de caméra et de la lentille de lampe

5. Appareil selon la revendication 1, incluant un système collecteur (700) présentant un corps de collecteur (702) destiné à choisir sélectivement un trajet d'écoulement associé à une buse particulière (675), et dans lequel le corps de collecteur (702) inclut une entrée (706) pour recevoir du fluide pompé à partir d'un réservoir et au moins un orifice de sortie (710a, 710b, 710c) pour expulser le fluide afin de nettoyer plusieurs surfaces.

6. Procédé de fourniture d'un fluide de nettoyage chauffé sur une surface de véhicule, ledit procédé comprenant les étapes consistant à :
fournir un boîtier (41) incluant un réservoir de fluide (103) ;
fournir un trajet d'entrée de fluide pour acheminer du fluide jusque dans le réservoir de fluide pour chauffer du fluide à partir d'une source extérieure ;
fournir un trajet de sortie de fluide en communication de fluide avec le réservoir de fluide (103) pour délivrer une quantité de fluide chauffé à une buse (675) destinée à pulvériser du fluide chauffé sur une surface ;
monter un dispositif de chauffage (500) et un échangeur de chaleur (80) en relation de transfert de chaleur l'un avec l'autre pour chauffer du fluide qui passe à travers le réservoir de fluide (103) ;
connecter un circuit de commande (14) au dispositif de chauffage (500) pour alimenter le dispositif de chauffage (500) avec une tension et ainsi chauffer le fluide passant à travers le réservoir de fluide (103) ;
faire s'écouler du fluide à travers le réservoir de fluide (103) tout en alimentant le dispositif de chauffage (500) pour chauffer le fluide à l'intérieur du réservoir de fluide (103) ;
faire s'écouler du fluide à travers la buse (675) incluant un corps (676) contenant deux orifices (677) et (678) avec des canaux d'orifices (679) et (680) dans une relation côte à côte, de telle sorte qu'un orifice (677) est pour l'air et un orifice 678) est pour le fluide chauffé, et disposer un tube de venturi (690) dans le trajet du fluide pour aspirer de l'air à travers un orifice (692) pendant que du fluide s'écoule à travers le tube de venturi (690).

7. Procédé selon la revendication 6, incluant la fourniture de la surface comme une lentille de caméra ou une lentille de lampe.

8. Procédé selon la revendication 7, incluant la disposition d'un élément électriquement conducteur (660) à proximité de l'une parmi la lentille de caméra et la lentille de lampe.

9. Procédé selon la revendication 7, incluant la disposition d'un revêtement électriquement conducteur (670) sur une parmi la lentille de caméra et la lentille de lampe.

10. Procédé selon la revendication 6, incluant la disposition d'un système collecteur (700) présentant un corps de collecteur (702) entre l'orifice de sortie (32) et la buse (675) et la sélection d'un trajet d'écoulement associé à une buse particulière (675), le procédé incluant en outre la réception de fluide, pompé à partir d'un réservoir, au niveau d'une entrée (706) du corps de collecteur (702) et l'expulsion du fluide à travers au moins un orifice de sortie (710a, 710b, 710c) du corps de collecteur (702) pour nettoyer plusieurs surfaces.
